# EUROPEAN PATENT SPECIFICATION

(11) **EP 0 376 842 B1**
(45) Date of publication and mention of the grant of the patent: **07.06.1995**
(21) Application number: 89403660.7
(22) Date of filing: 27.12.1989
(51) Int. Cl.: H04L 5/16

(54) **Control system for duplex communications channels**
Steuerungssystem für Duplex-Übertragungskanäle
Système de commande pour canaux de communication duplex

(30) Priority: 30.12.1988 ES 8804030
(43) Date of publication of application: 04.07.1990
(73) Proprietor: ALCATEL N.V., NL-1077 XX Amsterdam (NL)
(72) Inventor: Hita de la Torre, Carlos, E-28018 Madrid (ES)
(74) Representative: Weinmiller, Jürgen

(56) References cited:
- US-A- 3 906 153
- US-A- 4 177 451

## Description

### OBJECT OF THE INVENTION

This invention, as stated in the title of this technical description, consists of a control system for duplex communications channels which uses a single half-duplex communications controller for both directions of transmission. An example of such half-duplex communication controllers may be found in U.S. patent No. 4,177,451.

The invention considered here has the object of controlling a duplex communications link in which well-defined messages, packets or frames are used, at moderate or low signalling rates (19.2 kbit/s and lower).

In accordance with the invention, and contrarily to what is taught by the above U.S. patent No. 4,177,451, the half-duplex communications controller, in transmission mode, works at a rate much higher than that of line transmission and at that of the half-duplex communications controller in reception mode.

### BACKGROUND TO THE INVENTION

Duplex communications channels with simple communications protocols have traditionally been controlled with duplex control elements. As an example, consider the case of the circuits termed USART (Universal Synchronous Asyncronous Receiver Transmitter), among which the type 2651 is an industry standard (see "Philips Integrated Circuits Book IC 14N", 1985, pages 993 to 1006), which allow handling of communications protocols of the start/stop type and of the synchronous transmission type (including the IBM BiSync).

When the protocol is complex, as happens with bit-oriented protocols, e.g. HDLC, duplex controllers, expensive and complex in their operation, or else two half-duplex controllers, simpler and less expensive, one for each direction of transmission, can be used.

At present, duplex communications controllers are available on the market that permit control of duplex communications channels with a wide range of protocols, such as the types SCN2652 (see "Philips Integrated Circuits Book IC 14N", 1985, pages 563 to 582), or the I82530 (see "Intel Microcommunications Bandbook", 1986, pages 9.83 to 9.110). These controllers require a complex control process governed by the associated microprocessor and, in addition, they are very expensive.

### CHARACTERIZATION OF THE INVENTION

The object of the invention is to create a control system for duplex communication channels, making use of a single half-duplex communications controller, for which the invention is characterised in that the half-duplex communications controller is connected to a multiplexer which, in turn, is connected to two different clock circuits, with the object of providing it with a working frequency in reception mode and another working frequency in transmission mode; in that the half-duplex communications controller is connected, through a first control element, to a buffer memory in which the data are stored at a rate much higher than that at which they are transmitted to the line, and the output of which is connected to a serialiser circuit which delivers the data on line, through a transmission interface, at the line transmission rate; and in that the half-duplex communications controller is connected, through a second control element, to a reception interface that is connected to the line, in order to effect the reception at the line reception rate.

Reception takes place directly through the reception interface at the line reception rate.

On the other hand, to effect transmission, the data for sending are stored in the buffer memory at a rate much higher than the rate at which they are transmitted to line, the data being transferred to a parallel register at a rate eight times less than the line transmission rate.

The data are then sent to a new serial-parallel register, from which they are transmitted on line through the transmission interface at the line transmission rate.

Next, to facilitate a better understanding of this description and forming an integral part thereof, a single figure is attached, which shows the block diagram of the system of the invention.

### BRIEF DESCRIPTION OF THE FIGURES

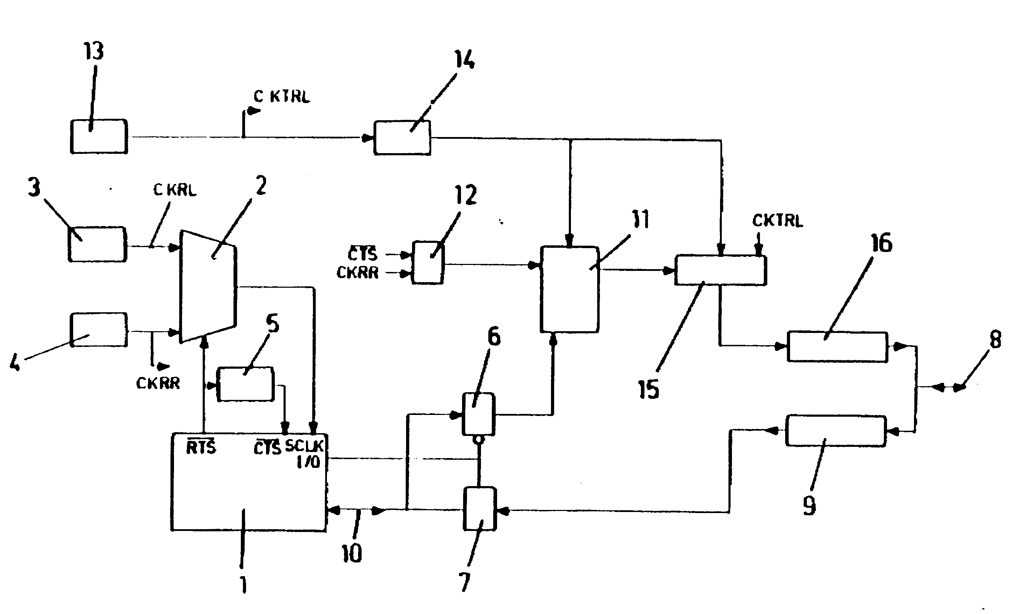

Figure 1, shows the block diagram of the system object of the invention.

### DESCRIPTION OF THE INVENTION

The invention is based on a half-duplex communications controller which is supplied with a clock signal at a frequency that depends on whether it is working in the transmission mode or in the reception mode.

The half-duplex communications controller normally works in the reception mode, receiving a clock signal that is suitable for the line reception rate; it changes for transmission mode operation when there is something to be transmitted and there is no information being received from the line. In the latter case, it is supplied with a clock signal as fast as the operation of the controller permits, and the information is passed into a buffer memory.

From this memory, the information is read at the line transmission rate and transmission to the line is carried out in a continuous manner. In this way, a quasi-duplex operation is achieved, the approximation to true duplex operation thus increasing as the ratio between the transmission mode clock signal and the reception mode clock signal increases.

Following, and making reference to the figure mentioned above, a description of the invention, which carries out the functions specified, is given.

Normally, the system works in the reception mode, for which the half-duplex communications controller 1 keeps the R̅T̅S̅ signal high (on), and consequently the clock signal selected through multiplexer 2 corresponds to the line reception rate, as generated by the reception clock circuit 3.

When transmission operation is desired, the half-duplex communications controller 1 changes the R̅T̅S̅ signal to low (off) and, consequently, through multiplexer 2 the clock signal selected is that corresponding to the storage rate for data to be transmitted in the buffer memory 11, generated by the fast clock circuit 4.

The half-duplex communications controller 1 also generates the I/O control signal which is synchronised with the C̅T̅S̅ signal produced by the delay circuit 5, the function of which is to delay the R̅T̅S̅ signal for the time required by the half-duplex communications controller to change from the reception to the transmission state. The I/O control signal is applied to the control elements 6 and 7.

If the I/O control signal is high (on), only control element 7 is activated, which permits the transfer of the information coming from line 8, through reception interface 9, to input 10 of the half-duplex communications controller 1. If the I/O control signal is low (off), only the control element 6 is activated, which permits the transfer of the information to be transmitted to the buffer memory 11.

To allow the correct operation of the buffer memory 11, this latter is connected to a third control element 12 at the inputs to which is received the C̅T̅S̅ signal and the signal coming from the fast clock circuit 4, termed the CKRR signal, which enable the writing of the data to be transmitted in the buffer memory 11 at the rate corresponding to the fast clock 4.

Once the message to be transmitted has been transferred to the buffer memory 11, the controller resets the I/O and R̅T̅S̅ signals to the high (on) state, thus returning to the reception mode.

The information stored in the buffer memory 11 is loaded in parallel, byte by byte, into the serialiser 15, for which reason the memory is connected to the line transmission clock circuit 13 through a divide-by-eight frequency divider 14, such that the memory is read at a rate eight times less than the line transmission rate.

The serialiser 15 consists of two eight-bit registers, such that the first of these receives in parallel the information coming from the buffer memory 11 and sends it with the appropriate timing to the second register which, in turn, converts it to serial form controlled by the CKTRL signal from the line transmission clock 13, for its transmission to line 8 through the transmission interface 16.

As can be gathered from the description up to this point, when the half-duplex communications controller 1 is in the transmission mode, all information being received from the line is lost.

Nonetheless, if the value of the ratio between the frequency of the CKRR signal from the fast clock 4 and that of the CKRL signal from the reception clock 3 is high, e.g.≧100, and taking into account that the flow of information received is not continuous due to the packet or frame formation process in the remote controller, and to the confirmation process of these, the percentage of lost frames and consequently to be retransmitted is very low.

From all the foregoing, it can therefore be deduced that in the reception mode, the information is received through the reception interface 9, and transferred to the half-duplex communications controller 1 through the control element 7. During this phase, the half-duplex communications controller 1 works with the CKRL clock signal, generated by the reception clock circuit 3 and selected by means of the multiplexer 2.

In the transmission mode, the half-duplex communications controller 1, once it has checked that it is not receiving information from the line, starts to work with the CKRR clock signal, generated by the fast clock circuit 4 and selected by means of multiplexer 2, and sends the information required to be transmitted to the buffer memory 11. Simultaneously, the buffer memory 11 is read in parallel and loaded into the serialiser 15, then passing to the transmission interface 16 for sending on line 8.

## Claims

1. CONTROL SYSTEM FOR DUPLEX COMMUNICATION CHANNELS on a transmission line (8), applicable to duplex channels that use protocols with well-defined frames, packets or messages, characterised in that:
- a half-duplex communications controller (1) is connected to a multiplexer (2) which, in turn, is connected to two different clock circuits (3 and 4) with the object of providing it with a working frequency in reception mode and another working frequency in transmission mode;
- the half-duplex communications controller (1) is connected, through a first control element (6), to a buffer memory (11) in which the data are stored at a rate much higher than that at which they are transmitted to the line (8), and the output of which is connected to a serialiser circuit (15) which delivers the data on line, through a transmission interface (16), at the line transmission rate; and
- the half-duplex communications controller (1) is connected, through a second control element (7), to a reception interface (9) that is connected to the line (8), in order to effect the reception at the line reception rate.

2. CONTROL SYSTEM FOR DUPLEX COMMUNICATIONS CHANNELS according to claim 1, characterised in that the control elements (6, 7) are connected to the half-duplex communications controller (1) over a common line (I/O) which causes only one of the control elements (6, 7) to be activated depending on whether the system is in the reception or in the transmission mode, and over another common line (10) that is used to receive the information from the line (8) and to send to the buffer memory (11) the information to be transmitted.

3. CONTROL SYSTEM FOR DUPLEX COMMUNICATIONS CHANNELS according to claim 1, characterised in that the half-duplex communications controller (1) is also connected to a delay circuit (5) that delays the working mode selection signal (R̅T̅S̅) for the time necessary for the half-duplex communications controller (1) to change from the reception to the transmission state.

4. CONTROL SYSTEM FOR DUPLEX COMMUNICATIONS CHANNELS according to claim 1, characterised in that the buffer memory (11) is also connected to a third control element (12) that governs writing data in the memory at the rate of the fast clock (4), and to a line transmission clock circuit (13), through a divide-by-eight frequency divider (14), which governs the read signal and consequently the transfer of data from the buffer memory (11) to the serialiser (15).

5. CONTROL SYSTEM FOR DUPLEX COMMUNICATIONS CHANNELS according to the preceding claims, characterised in that the serialiser circuit (15) includes a parallel load register that is operated by the signal from the divide-by-eight divider (14) and a parallel-load and serial-output register operated by the (CKTRL) signal from the line transmission clock (13), the transmission to line (8) taking place at the line transmission rate.

6. CONTROL SYSTEM FOR DUPLEX COMMUNICATIONS CHANNELS according to preceding claims, characterised in that the half-duplex communications controller (1) is normally in the reception mode, and changes this state when transmission operation is desired, after having verified that it is not receiving information from the line (8).

## Patentansprüche

1. STEUERSYSTEM FÜR DUPLEX-KOMMUNIKATIONSKANÄLE auf einer Übertragungsleitung (8), das auf Duplex-Kanäle, die Protokolle mit genau festgelegten Rahmen, Paketen oder Nachrichten nutzt, dadurch gekennzeichnet, daß:
- eine Halbduplex-Kommunikationssteuereinheit (1) mit einem Multiplexer (2) verbunden ist, der wiederum mit zwei unterschiedlichen Taktschaltungen (3 und 4) verbunden ist, deren Aufgabe es ist, jeden mit einer Betriebsfrequenz im Empfangsmodus und einer anderen Betriebsfrequenz für den Übertragungsmodus zu versorgen;
- die Halbduplex-Kommunikationssteuereinheit (1) über ein erstes Steuerelement (6) mit einem Pufferspeicher (11) verbunden ist, in dem die Daten bei einer Rate gespeichert werden, die viel höher ist als die, mit der sie zur Leitung (8) gesendet wurden, und deren Ausgang mit einer seriellen Schaltung (15) verbunden ist, welche die Daten über eine Übertragungsschnittstelle (16) mit der Übertragungsrate der Leitung liefert; und
- die Halbduplex-Kommunikationssteuereinheit (1) über ein zweites Steuerelement (7) mit einer Empfangsschnittstelle (9) verbunden ist, wobei diese mit der Leitung (8) verbunden ist, um den Empfang bei der Empfangsrate der Leitung zu bewirken.

2. STEUERSYSTEM FÜR DUPLX-KOMMUNIKATIONSKANÄLE gemäß Anspruch 1, dadurch gekennzeichnet, daß die Steuerelemente (6, 7) mit der Halbdupex-Kommuniaktionssteuereinheit (1) über eine gemeinsame Leitung (E/A), sowie über eine andere gemeinsame Leitung (10) verbunden sind, die genutzt wird, um die Informationen von der leitung (8) zu empfangen und die zu übertragenden Informationen an den Pufferspeicher (11) zu übertragen, was dazu führt, daß nur eines der Steuerelemente (6, 7) in Abhängigkeit davon aktiviert wird, ob sich das System im Empfangsmodus oder im Übertragungsmodus befindet.

3. STEUERSYSTEM FÜR DUPLX-KOMMUNIKATIONSKANÄLE gemäß Anspruch 1, dadurch gekennzeichnet, daß die Halbduplex-Kommunikationssteuereinheit (1) ebenfalls mit der Verzögerungsschaltung (5) verbunden ist, die das Auswahlsiganl für den Betriebsmodus (R̅T̅S̅) für die Zeit verzögert, die für die Halbduplex-Kommunikationssteuereinheit (1) notwendig ist, vom Empfangszustand in den Übertragungszustand zu wechseln.

4. STEUERSYSTEM FÜR DUPLX-KOMMUNIKATIONSKANÄLE gemäß Anspruch 1, dadurch gekennzeichnet, daß der Pufferspeicher (11) ebenfalls mit einem dritten Steuerelement (12), welches das Schreiben der Daten in den Speicher bei der Rate des schnellen Taktes (4) verwaltet, mit einer Taktschaltung der Übertragungsleitung (13) über einen durch acht teilenden Frequenzteiler (14) verbunden ist, der das Lesesignal und folglich die Übertragung der Daten vom Pufferspeicher zur Serialisierngseinheit (15) verwaltet.

5. STEUERSYSTEM FÜR DUPLX-KOMMUNIKATIONSKANÄLE gemäß den vorangegangenen Ansprüchen, dadurch gekennzeichnet, daß die Serialisierungsschaltung (15) ein paralleles Laderegister, welches durch das Signal vom durch acht teilenden Dividierer (14) betrieben wird, und ein paralleles Lade- sowie ein serielles Ausgangsregister enthält, die durch das (CKTRL) Signal vom Übertragungstakt der Leitung (13) betrieben werden, wobei das Übertragen zur Leitung (8) mit der Übertagungsrate der Leitung erfolgt.

6. STEUERSYSTEM FÜR DUPLX-KOMMUNIKATIONSKANÄLE gemäß den vorangegangenen Ansprüchen, dadurch gekennzeichnet, daß sich die Halbduplex-Kommunikationssteuereinheit (1) normalerweise im Empfangsmodus befindet, und diesen Zustand ändert, wenn Übertragungsbetrieb angefordert wird, nachdem überprüft wurde, daß sie keine Informationen von der Leitung (8) empfängt.

## Revendications

1. Système de commande pour canaux de communication duplex sur une ligne de transmission (8), applicable à des canaux exploités en duplex et utilisant des protocoles avec des trames, des paquets ou des messages bien définis, caractérisé
- par le fait qu'un organe de commande de communication (1) exploité en alternat est relié à un multiplexeur (2) qui, à son tour, est relié à deux circuits d'horloge différents (3 et 4) dans le but de lui fournir une fréquence de travail en mode réception et une autre fréquence de travail en mode transmission;
- par le fait que l'organe de commande (1) de communication exploité en alternat est relié, par l'intermédiaire d'un premier élément de commande (6), à une mémoire tampon (11) dans laquelle les données sont mémorisées à un débit beaucoup plus élevé que celui auquel elles sont transmises sur la ligne (8), et dont la sortie est reliée à un circuit de conversion parallèle-série (15) qui, par l'intermédiaire d'une interface de transmission (16), envoie les données sur la ligne au débit de transmission de la ligne; et
- par le fait que l'organe (1) de communication exploité en alternat est relié, par l'intermédiaire d'un second élément de commande (7), à une interface de réception (9) qui est reliée à la ligne (8) pour assurer la réception au débit de réception de la ligne.

2. Système de commande pour canaux de communication duplex selon la revendication 1, caractérisé par le fait que les éléments de commande (6, 7) sont reliés à l'organe de commande de communication(1)exploité en alternat sur une ligne commune (I/O) qui fait en sorte que l'un seulement des éléments de commande (6, 7) soit activé selon que le système se trouve en mode réception ou en mode transmission, et sur une autre ligne commune (10) qui sert à recevoir l'information provenant de la ligne (8) et à envoyer à la mémoire tampon (11) l'information à transmettre.

3. Système de commande pour canaux de communication duplex selon la revendication 1, caractérisé par le fait que l'organe de commande de communication (1) exploité en alternat est également relié à un circuit à retard (5) qui retarde le signal (R̅T̅S̅) de sélection du mode de travail pendant le temps nécessaire pour que l'organe de commande de communication (1) exploité en alternat passe de l'état réception à l'état transmission.

4. Système de commande pour canaux de communication duplex selon la revendication 1, caractérisé par le fait que la mémoire tampon (11) est également reliée à un troisième élément de commande (12) qui régit l'écriture des données en mémoire à la cadence du signal d'horloge rapide (4) et à un circuit d'horloge (13) de transmission en ligne, par l'intermédiaire d'un diviseur de fréquence de division par huit (14) qui régit le signal de lecture et par conséquent le transfert des données, de la mémoire tampon (11), au circuit (15) de conversion parallèle-série.

5. Système de commande pour canaux de communication duplex selon les revendications précédentes, caractérisé par le fait que le circuit (15) de conversion parallèle-série comporte un registre à chargement parallèle qui est manoeuvré par le signal provenant du diviseur (14) de division par huit et un registre à chargement parallèle et sortie série manoeuvré par le signal (CKTRL) provenant de l'horloge (13) de transmission en ligne, la transmission sur la ligne (8) se faisant à la cadence de la transmission en ligne.

6. Système de commande pour canaux de communication duplex selon les revendications précédentes, caractérisé par le fait que l'organe de commande de communication (1) exploité en alternat est normalement en mode réception et modifie cet état lorsqu'une opération en transmission est désirée, après avoir vérifié qu'il n'est pas en cours de recevoir une information en provenance de la ligne (8).
